# EUROPÄISCHE PATENTSCHRIFT

(11) **EP 0 296 312 B1**
(45) Veröffentlichungstag und Bekanntmachung des Hinweises auf die Patenterteilung: **19.05.1993**
(21) Anmeldenummer: 88103970.5
(22) Anmeldetag: 12.03.1988
(51) Int. Cl.: C03C 17/06, C03C 8/00, C04B 41/88

(54) **Mikrowellenbeständige Edelmetall-Dekoration**
Microwave resistant precious metal decoration
Décor à base de métaux nobles résistant aux micro-ondes

(30) Priorität: 25.06.1987 DE 3721000
(43) Veröffentlichungstag der Anmeldung: 28.12.1988
(73) Patentinhaber: W.C. Heraeus GmbH, D-63450 Hanau (DE)
(72) Erfinder: Strauss, Joachim, D-6450 Hanau (DE); Göbel, Wolfgang, D-6450 Hanau (DE); Landgraf, Günter, Dr., D-6450 Hanau (DE); Wild, Wolfgang, D-6450 Hanau (DE)
(74) Vertreter: Kühn, Hans-Christian

(56) Entgegenhaltungen:
- EP-A- 0 247 922
- FR-A- 2 279 695
- GB-A- 874 157
- CHEMICAL ABSTRACTS, Band 107, Nr. 8, August 1987, Seite 288, Zusammenfassung Nr. 63666v, Columbus, Ohio, US; & JP-A-62 105 990 (NANIWA KINEKI K.K.) 16-05-1987
- CHEMICAL ABSTRACTS, Band 107, Nr. 16, Oktober 1987, Seite 346, Zusammenfassung Nr. 139692y, Columbus, Ohio, US; & JP-A-62 138 379 (NANIWA KINEKI K.K.) 22-06-1987

## Beschreibung

Die Erfindung betrifft die Verwendung eines Glanzedelmetallpräparats für die Herstellung einer auf für den Gebrauch in einem Mikrowellenherd geeignetem silicatischem Geschirr eingebrannten Edelmetall-Dekoration.

Zum Dekorieren von Glas, Keramik und Porzellan mit Edelmetallen werden als Edelmetallpräparate hauptsächlich Glanzgolde, Poliergolde, Goldlüster und die entsprechenden Platin- und Palladiumpräparate benutzt.

Glanzedelmetallpräparate, wie Glanzgold, Glanzplatin und Glanzpalladium, bestehen aus Lösungen von organischen Gold-, Platin- und Palladiumverbindungen, meist der Sulforesinate, in organischen Verarbeitungshilfsmitteln, die beim Brand restlos verbrennen oder verdampfen, und enthalten üblicherweise noch andere organische Metallverbindungen, beispielsweise die Resinate beziehungsweise Sulforesinate von Rhodium, Wismut und Silber. Die Präparate werden auf den zu dekorierenden Gegenstand aufgetragen und bei Temperaturen zwischen 500 und 850°C eingebrannt. Die auf diese Weise erzeugte Edelmetall-Dekoration kommt hochglänzend aus dem Ofen und braucht daher nachträglich nicht poliert zu werden.

Für die Herstellung von mit edelmetallhaltigen Schichten überzogenen glaskeramischen Gegenständen geeignete Glanzedelmetallüberzugsmassen sind aus DE-C-1 421 865 bekannt. Sie bestehen aus einer löslichen organischen Edelmetallverbindung, 0,25 bis 10 Mol je Mol Edelmetall eines löslichen Flußmittels, beispielsweise Aluminium-, Antimon-, Barium-, Wismut-, Bor-, Cadmium- oder Calciumresinat, und einem organischen Träger.

Edelmetallpräparate, die zwar wie die Glanzedelmetalle lösliche organische Edelmetallverbindungen enthalten, doch ohne daß sie nach dem Einbrennen poliert zu werden brauchen, den Poliergold-Dekorationen ähnliche Dekorationen ergeben, sind aus US-A-4 418 099 bekannt. Als Zusätze enthalten sie organische Unedelmetallverbindungen, wie die Resinate von beispielsweise Antimon, Chrom, Germanium, Zinn, Titan, Vanadin und Eisen, und ein glänzendes Pigment, wie Glimmer oder Perlmutt.

Poliergolde sind Suspensionen feiner Gold-Pulver und/oder schwerlöslicher Goldverbindungen in organischen Verarbeitungshilfsmitteln oder in Glanzgold-Lösungen und können zusätzlich noch lösliche Flußmittel, silicatische Gläser und schwerlösliche Verbindungen enthalten. Durch Polieren bekommt das nach dem Brand zunächst bräunlich matte Poliergold einen schönen goldfarbenen Seidenglanz.

Ein Goldpräparat dieser Art ist beispielsweise aus GB-A-721 906 bekannt. Es besteht aus einer Suspension von feinem Gold-Pulver in einer Lösung von Blei-, Wismut-, Bor- und/oder Siliciumresinat.

Die Edelmetall-Lüsterpräparate ähneln in ihrer Zusammensetzung den Glanzedelmetallpräparaten, sind jedoch edelmetallärmer und reicher an löslichen organischen Unedelmetallverbindungen als jene. Durch Einbrennen können daraus elektrisch nichtleitende Schichten verschiedener Färbungen erhalten werden (siehe beispielsweise DE-C-1 1 284 808, DE-C-1 286 866 und DE-C-1 298 828).

In neuerer Zeit wurden bei höheren Temperaturen - etwa im Bereich von 1100 - 1400°C - einzubrennende Edelmetallpräparate entwickelt, die zu mechanisch und chemisch sehr beständigen Dekorationen führen und die Herstellung von Gebrauchsgeschirr mit spülmaschinenfestem Edelmetalldekor ermöglichen.

So werden zum Beispiel in DE-C-22 08 915 Polier- und Pudergoldpräparate beschrieben, die, um sie bei höherer Temperatur einbrennen zu können, als Zusatz 5 - 50 %, bezogen auf den Feingold-Gehalt, Cassiusschen Goldpurpur, Zinnoxid, Zinnsäure, Metazinnsäure, Eisenoxid und/oder Aluminiumoxid enthalten.

Goldhaltige Überzugsmassen, die auf keramischen Gegenständen bei Temperaturen oberhalb des Schmelzpunktes des Goldes eingebrannt werden können, sind auch aus DE-C-24 35 859 bekannt. Sie enthalten neben dem Goldpräparat 3 - 40 Gewichts-% eines oder mehrerer Unedelmetalle und/oder eines oder mehrerer Edelmetalle mit einem Schmelzpunkt oberhalb von 1400°C und bis zu 10 % eines Haftoxides oder Glasflusses. Beim Brennen bilden sich zwischen dem Gold und den Unedelmetallen, die nur zum Teil unter Bildung besonders feinteiliger Oxide oxidiert werden, Legierungen.

Mischungen aus thermisch zersetzbaren organischen Edelmetallverbindungen, zum Beispiel Rutheniumresinat, und thermisch zersetzbaren, glasbildenden organischen Metallverbindungen, zum Beispiel Wismut-, Blei-, Silicium-, Mangan- und Borresinat, können - wie aus US-A-3 271 193 bekannt - für die Herstellung elektrischer Widerstandselemente Verwendung finden. Dazu werden Lösungen der Metallverbindungen auf temperaturbeständige Träger aufgetragen und bei 750 - 900°C eingebrannt.

Auch DE-A-22 33 654 betrifft die Herstellung von elektrischen Widerständen unter Verwendung von thermisch zersetzbaren Massen, die neben organischen Gold- und/oder Platin-, Palladium-, Iridium-, Rhodium-, Ruthenium-Verbindungen organische Verbindungen von Wismut, Silicium, Bor, Kupfer, Eisen, Titan, Aluminium, Chrom, Nickel, Blei, Mangan, Kobalt enthalten. Der Unedelmetall-Gehalt dieser Massen beträgt 0,05 - 8 %, der Edelmetall-Gehalt 1 - 15 %. Den Massen kann noch Glas-Pulver in einer Menge von 5 - 50 % beigemischt werden, wobei dieser Zusatz teilweise in Form von Organometall-Verbindungen, die beim Brennen ein Gemisch glasbildender Oxide ergeben, erfolgen kann.

Mit Edelmetallen verziertes Geschirr ist für den Gebrauch in Mikrowellenherden nicht geeignet, da die Edelmetall-Dekoration durch die Mikrowellen zerstört wird. Wie aus DE-C-36 15 272 bekannt, können jedoch unter Verwendung von beliebigen handelsüblichen Edelmetall-Präparaten, wie Glanzgold-, Poliergold-, Pudergold-, Glanzplatin-, Polierplatin-, Puderplatin- oder Glanzpalladium-Präparaten, Geschirrteile aus silicatischem Werkstoff, wie Glas, Porzellan, Steingut oder Keramik, mit einer gegen Mikrowellen beständigen Edelmetall-Dekoration versehen werden, wenn sie aus einer Vielzahl von Rasterelementen besteht.

Aus JP-A-62 105 990 und JP-A-62 138 379 (Chemical Abstracts, Band 107, Nr. 8, August 1987, Seite 288, Nr. 63666v, und Nr. 16, Oktober 1987, Seite 346, Nr. 139692y, Columbus, Ohio, US) sind Glanzgoldpräparate bekannt, die neben einer organischen Goldverbindung organische Verbindungen des Wismuts, Indiums und Siliciums enthalten. Die mit den Glanzgoldpräparaten durch Einbrennen bei 600 - 850°C erzeugten keramischen Dekorationen sind goldfarben oder - wenn sie zusätzlich Platin enthalten - silberfarben und elektrisch nichtleitend. Das in dem Glanzgoldpräparat enthaltene Wismut erniedrigt den Schmelzpunkt der sich beim Einbrennen bildenden Gold-Legierungen und bewirkt zusammen mit Indium und Silicium, daß die Gold-Legierungen elektrisch nichtleitend sind. Die Mengen an Wismut, Indium und Silicium müssen in einem bestimmten Bereich liegen, damit die Erniedrigung des Schmelzpunktes, die elektrische Nichtleitfähigkeit und die Gold- oder Silberfarbe erzielt werden können.

EP-A-0 247 922 betrifft ein in Mikrowellenherden zu benutzendes Geschirr (sogenanntes Bräunungsgeschirr), das außen mit Email und darin eingeschlossenen elektrisch leitenden Teilchen aus einem oder mehreren Metallen (auch Edelmetalle), ihren Oxiden oder Mischungen der Metalle mit den Oxiden überzogen ist, und ein Verfahren zur Herstellung des Überzugs unter Verwendung von das Email bildenden Substanzen und der Metalle und/oder Metalloxide in Pulverform.

Es stellt sich nun als Aufgabe der Erfindung, ein für die Herstellung einer auf silicatischem Geschirr, das zum Gebrauch in einem Mikrowellenherd geeignet sein soll, eingebrannten Edelmetall-Dekoration zu verwendendes Glanzedelmetallpräparat zu finden. Die Edelmetall-Dekoration soll - ohne daß ihre Zerlegung in Rasterelemente erforderlich ist - beliebig gestaltet werden können, und ihre Farbe soll durch Auswahl der Edelmetalle und der Unedelmetalle zu variieren sein.

Die Lösung der Aufgabe ist erfindungsgemäß die Verwendung eines Glanzedelmetallpräparats, das, bezogen auf den Gesamtmetall-Gehalt des Präparats, 60 - 90 Gewichts-% Edelmetall und 10 - 40 Gewichts-% Unedelmetall und Edelmetall und Unedelmetall als lösliche organische Verbindungen enthält, für die Herstellung einer auf silicatischem Geschirr eingebrannten Edelmetall-Dekoration, die aus einer zusammenhängenden Schicht besteht und einen Flächenwiderstand von mindestens 1 KΩ/ [] besitzt, gelöst, wobei das mit der Edelmetall-Dekoration versehene Geschirr für den Gebrauch in einem Mikrowellenherd geeignet ist.

Besonders bewährt hat sich die mikrowellenbeständige Edelmetall-Dekoration, wenn der Flächenwiderstand mindestens 1 MΩ/[] beträgt.

Es wird angenommen, daß in der Edelmetall-Dekoration das Edelmetall in Form von durch die elektrisch nichtleitenden oder halbleitenden Unedelmetallverbindungen voneinander getrennten feindispersen Teilchen vorliegt.

Mit einer Glanzedelmetall-Dekoration dieser Art verzierte Gegenstände aus Glas, Keramik, Steingut und Porzellan können durch Einbrennen keramischer Glanzedelmetallpräparate mit einem Edelmetall-Gehalt von 60 - 90 Gewichts-% und einem Unedelmetall-Gehalt von 10 - 40 Gewichts-%, jeweils bezogen auf den Gesamtmetall-Gehalt des Präparats, erzeugt werden.

Durch Auswahl der Edelmetalle und der Unedelmetalle kann die Farbe der Edelmetall-Dekoration von gelbrot über kupferfarben bis metallisch braun oder platingrau variiert werden.

Die Edelmetalle und Unedelmetalle liegen als lösliche organische Edelmetallverbindungen und lösliche organische Unedelmetallverbindungen, vorzugsweise als Resinate oder Sulforesinate, vor.

Geeignete Unedelmetallresinate und -sulforesinate, auch als lösliche Flußmittel bezeichnet, sind solche, die üblicherweise in Edelmetallpräparaten verwendet werden, wie beispielsweise die von Aluminium, Antimon, Barium, Wismut, Bor, Calcium, Cer, Chrom, Kobalt, Silicium, Germanium, Tantal, Zinn, Titan, Zink und Zirkonium (siehe zum Beispiel DE-C-1 421 865 und US-A-4 418 099).

Die in den Glanzedelmetallpräparaten enthaltenen organischen Verarbeitungshilfsmittel entsprechen denjenigen, die in den handelsüblichen Edelmetallpräparaten verwendet werden.

Die Glanzgoldpräparate können, um gewisse Farbton-Änderungen zu erreichen, neben Gold noch andere Edelmetalle, zum Beispiel Silber, enthalten.

Zur näheren Erläuterung der Erfindung wird in dem folgenden Beispiel ein Glanzgoldpräparat und seine Anwendung zur Herstellung einer auf Porzellan eingebrannten, aus einer zusammenhängenden Schicht bestehenden Glanzgold-Dekoration, die im Mikrowellenherd nicht zerstört wird, beschrieben.

### Glanzgoldpräparat

Ein aus

| | |
|---|---|
| Goldsulforesinat, 54 % Au | 13.9 Gewichts-% |
| Rhodiumsulforesinat, 15 % Rh | 0,5 " |
| Siliciumresinat, 6 % Si | 5,0 " |
| Wismutresinat, 3 % Bi | 28,0 " |
| Pine Oil | 38,0 " |
| Xylol | 14,6 " |

zubereitetes Glanzgoldpräparat mit einem Edelmetall-Gehalt von 87 Gewichts-% und einem Unedelmetall-Gehalt von 13 Gewichts-% (jeweils auf den Gesamtmetall-Gehalt bezogen) wird mit dem Pinsel als etwa 2 cm breiter Rand auf einen Porzellanteller aufgetragen.

Nach dem Brennen bei 800°C erscheint die Dekoration in kupfergoldener Farbe; ihr Flächenwiderstand beträgt etwa 100 MΩ/[].

Um die Beständigkeit der Dekoration gegenüber Mikrowellen zu prüfen, wird der Teller mehrmals für 15 Minuten in einen Mikrowellenherd gestellt. Die Dekoration zeigt keinerlei Beschädigungen.

## Patentansprüche

1. Verwendung eines Glanzedelmetallpräparats, das, bezogen auf den Gesamtmetall-Gehalt des Präparats, 60 - 90 Gewichts-% Edelmetall und 10 - 40 Gewichts-% Unedelmetall und Edelmetall und Unedelmetall als lösliche organische Verbindungen enthält, für die Herstellung einer auf silicatischem Geschirr eingebrannten Edelmetall-Dekoration, die aus einer zusammenhängenden Schicht besteht und einen Flächenwiderstand von mindestens 1 KΩ/[] besitzt, wobei das mit der Edelmetall-Dekoration versehene Geschirr für den Gebrauch in einem Mikrowellenherd geeignet ist.

2. Verwendung eines Glanzedelmetallpräparats nach Anspruch 1, wobei die eingebrannte Edelmetall-Dekoration aus einer zusammenhängenden Schicht besteht und einen Flächenwiderstand von mindestens 1 MΩ/[] besitzt.

3. Verwendung eines Glanzedelmetallpräparats nach Anspruch 1 oder 2, dadurch gekennzeichnet, daß Edelmetall und Unedelmetall als Resinate beziehungsweise Sulforesinate vorliegen.

4. Verwendung eines Glanzedelmetallpräparats nach einem der Ansprüche 1 bis 3, dadurch gekennzeichnet, daß es als Edelmetall Gold enthält.

5. Verwendung eines Glanzedelmetallpräparats nach einem der Ansprüche 1 bis 4, dadurch gekennzeichnet, daß es als Unedelmetall Aluminium, Antimon, Barium, Wismut, Bor, Calcium, Cer, Chrom, Kobalt, Silicium, Germanium, Tantal, Zinn, Titan, Zink und/oder Zirkonium enthält.

## Claims

1. The use of a burnished precious metal preparation which, in relation to the total metal content of the preparation, contains 60 - 90 weight % of precious metal and 10 - 40 weight % of non-precious metal and precious metal and non-precious metal as soluble organic compounds, for the production of a precious metal decoration fired in on silicate crockery, which consists of a cohesive layer and has a surface resistance of at least 1 KΩ/[], the crockery provided with the precious metal decoration being suitable for use in a microwave oven.

2. The use of a burnished precious metal preparation according to Claim 1, in which the fired-in precious metal decoration consists of a cohesive layer and has a surface resistance of at least 1 MΩ/[].

3. The use of a burnished precious metal preparation according to Claim 1 or 2, characterised in that precious metal and non-precious metal are present as resinates or respectively sulphoresinates.

4. The use of a burnished precious metal preparation according to one of Claims 1 to 3, characterised in that it contains gold as a precious metal.

5. The use of a burnished precious metal preparation according to one of Claims 1 to 4, characterised in that it contains as a non-precious metal aluminium, antimony, barium, bismuth, boron, calcium, cerium, chromium, cobalt, silicon, germanium, tantalum, tin, titanium, zinc and/or zirconium.

## Revendications

1. Utilisation d'une préparation brillante à base de métaux nobles qui contient, par rapport à la teneur totale en métaux de la préparation, 60 à 90% en poids de métal noble et 10 à 40% en poids de métal commun et qui contient le métal noble et le métal commun sous forme de composés organiques solubles, pour la fabrication d'une décoration à base de métaux nobles cuite sur de la vaisselle aux silicates, qui consiste en une couche continue et qui présente une résistance de surface d'au moins 1 KΩ/□, la vaisselle munie de la décoration à base de métaux nobles pouvant être utilisée dans un four à micro-ondes.

2. Utilisation d'une préparation brillante à base de métaux nobles selon la revendication 1, dans laquelle la décoration à base de métaux nobles cuite consiste en une couche continue et possède une résistance de surface d'au moins 1 MΩ/□.

3. Utilisation d'une préparation brillante à base de métaux nobles selon la revendication 1 ou 2, caractérisée en ce que le métal noble et le métal commun sont présents sous forme de résinates ou de sulforésinates.

4. Utilisation d'une préparation brillante à base de métaux nobles selon l'une des revendications 1 à 3, caractérisée en ce qu'elle contient comme métal noble de l'or.

5. Utilisation d'une préparation brillante à base de métaux nobles selon l'une des revendications 1 à 4, caractérisée en ce qu'elle contient comme métal commun de l'aluminium, de l'antimoine, du baryum, du bismuth, du bore, du calcium, du cérium, du chrome, du cobalt, du silicium, du germanium, du tantale, de l'étain, du titane, du zinc et/ou du zirconium.
